# EUROPÄISCHE PATENTSCHRIFT

(11) **EP 1 707 830 B1**
(45) Veröffentlichungstag und Bekanntmachung des Hinweises auf die Patenterteilung: **10.10.2012**
(21) Anmeldenummer: 06005445.9
(22) Anmeldetag: 17.03.2006
(51) Int. Cl.: F16C 33/12, F16C 33/14, F16C 33/10, C23F 1/18

(54) **Verfahren zur Herstellung eines Gleitlagers mit einer Gleitoberfläche, bestehend aus einer Kupfer- Mehrstofflegierung**
Manufacturing process of a sliding bearing having a sliding surface of copper/multiple alloy
Procédé de réalisation d'un palier lisse muni d'une surface glissante en alliage cuivre-multiple

(30) Priorität: 30.03.2005 DE 102005014302
(43) Veröffentlichungstag der Anmeldung: 04.10.2006
(73) Patentinhaber: Wieland-Werke AG, 89070 Ulm (DE)
(72) Erfinder: Grohbauer, Adolf, 89075 Ulm (DE); Hage, Manfred, Dr., 89250 Senden (DE); Scharf, Michael, 89165 Dietenheim (DE)

(56) Entgegenhaltungen:
- DE-A1- 2 921 471
- DE-C- 548 633
- DE-C- 977 311
- DE-C1- 10 047 775

## Beschreibung

Die Erfindung betrifft ein Verfahren zur Herstellung eines Gleitlagers mit einer Gleitoberfläche, bestehend aus einer Kupfer-Mehrstofflegierung mit zumindest zwei Phasenbestandteilen und ein Gleitlager aus der Kupfer-Mehrstofflegierung.

Seit Jahrzehnten haben sich bereits Kupferlegierungen für Lager bewährt. Sie erfüllen wegen ihres Gefügeaufbaus und aufgrund ihrer Eigenschaften die an sie gestellten Anforderungen besonders gut. Bei der Herstellung werden oft Knetwerkstoffe eingesetzt, die durch Warm- und Kaltumformung ein gleichmäßiges und feinkörniges Gefüge ausbilden, das bei Gleitbeanspruchung besonders vorteilhaft ist. Durch eine Gefügeumbildung können innerhalb bestimmter Bereiche die erforderlichen Festigkeitswerte eingestellt werden, wodurch sich die Belastbarkeit und die Verschleißfestigkeit erhöhen lässt.

Besondere Anforderungen sind jedoch an die miteinander in Kontakt stehenden Laufflächen der Gleitpartner zu stellen. Unter Einsatz von Schmierstoffen wird durch deren Haftfähigkeit und Viskosität ein tragender Schmierfilm aufgebaut, durch den in erster Linie der Verschleiß reduziert werden soll. Die Oberflächenbeschaffenheit der Laufflächen hat in Verbindung mit einer Ausbildung eines flächigen Schmierfilms einen wesentlichen Einfluss auf die Standzeit eines Lagers. Besonders nachteilig auf die Standzeit wirkt sich jedoch ein Hinzutreten von Schmutzteilchen aus. Sei es durch Abrieb der Lagerflächen selbst oder durch Eintrag zwischen die Laufflächen über Schmierstoffe.

Bekannt ist, über besondere Feinbearbeitungsverfahren eine gezielte Oberflächenstrukturierung der Lauffläche zu erreichen. Beispiele hierfür sind Honverfahren, wie sie bei Zylinderlaufbuchsen in Verbrennungsmotoren Einsatz finden. Über solche mechanische Bearbeitungsverfahren wird ein sehr feines Schmiertaschensystem in die Buchse eingebracht, wodurch das sich über ein Schmierstoffdepot bildende Ölpolster das Gleiten verbessert und den Verschleiß reduziert. Des Weiteren ist auch bekannt, mit Laser die Oberfläche zu strukturieren. Form und Lage der einzelnen Schmiertaschen lassen sich hierbei zwar gezielt einstellen, dieses Verfahren ist jedoch enorm zeitaufwendig und als Einzelfertigung entsprechend kostspielig.

Zudem ist aus der Druckschrift DE 101 57 316 A1 ein Lager mit einer nanoskopisch rauen Lagerfläche und ein Verfahren zur Herstellung eines derartigen Lagers bekannt. Mit einer derartigen Lagerfläche soll eine Verbesserung der Lagereigenschaften in Form einer Minimierung der Partikelbildung und Verringerung der Reibung erzielt werden. Die nanoskopisch raue Lagerfläche wird durch ein Anätzen, mechanisches Aufrauen oder auch durch ein elektrochemisches Verfahren hergestellt. Beim Anätzen wird die Oberfläche mit einer wahlweise erwärmten Säure, beispielsweise durch Chromschwefelsäure oder Schwefelsäure, behandelt. Als geeignete Werkstoffe zur Ausbildung einer nanoskopisch rauen Oberfläche sind Metalllegierungen auf der Basis von Eisen, Titan oder Chrom genannt.

Des Weiteren sind aus der Druckschrift DE 100 47 775 C1 Kupfer-Aluminium-Mehrstoffbronzen für den Einsatz als Lagerwerkstoff im Motorenbau bekannt. Bei der beschriebenen Verwendung bleiben die Laufflächen unbehandelt, wobei davon ausgegangen wird, dass sich bei derartigen Hochleistungslagerwerkstoffen nach kurzer Laufzeit Tribooxidationsschichten ausbilden. Dabei handelt es sich um dünne Schichten, die sich durch Wärme und hohe Presskraft über eine chemische Reaktion als Deckschicht ausbilden. Generell sind derartige dünne Schichten erwünscht, da sie bei den Laufpartnern den Reibkoeffizienten herabsetzen und den Basiswerkstoff vor Verschleiß schützen.

Aus der deutschen Patentschrift 548 633 ist ein Verfahren zur Herstellung von Lagern bekannt, bei dem mit einer Säuremischung die Oberfläche einer Zinnbronze so angeätzt wird, dass nur ein Teil der Strukturbestandteile angegriffen wird, während der andere Teil unangetastet bleibt. Dabei werden die in der Legierung vorhandenen harten Zinn-Kupfer-Kristalle erhaben zurückbleiben.

Der Erfindung liegt die Aufgabe zugrunde, ein Verfahren zur Herstellung eines Gleitlagers mit tribologisch günstigen Gleitoberflächen weiterzubilden.

Die Erfindung wird bezüglich des Verfahrens zur Herstellung eines Gleitlagers durch die Merkmale des Anspruchs 1 und bezüglich eines durch das Verfahren hergestellten Gleitlagers durch die Merkmale des Anspruchs 2 wiedergegeben. Die weiteren rückbezogenen Ansprüche betreffen vorteilhafte Aus- und Weiterbildungen der Erfindung.

Die Erfindung schließt bezüglich eines Verfahrens zur Herstellung eines Gleitlagers mit einer Gleitoberfläche, bestehend aus einer Kupfer-Mehrstofflegierung mit zumindest zwei Phasenbestandteilen, die Schritte ein, bei denen mittels einer Säure zumindest ein Phasenbestandteil an der Gleitoberfläche herausgelöst wird und zumindest ein weiterer Phasenbestandteil erhaben zurückbleibt.

Die Erfindung geht dabei von der Überlegung aus, ein Ätzen der Oberfläche von Lagern in einer Säure entsprechend der Phasenbestandteile im Werkstoff durchzuführen. Der Werkstoff ist mehrphasig, wobei die einzelnen Phasenbestandteile unterschiedlich abgetragen werden. Dies beruht darauf, dass gewisse Ausscheidungsphasen sich in ihrem elektrochemischen Potential beträchtlich vom Grundmaterial unterscheiden. Es kann also gezielt der weiche Grundwerkstoff entfernt werden. Dadurch entstehen erhabene harte Partikel, ruhend auf einer weichen Grundmatrix.

Als Säuren eignen sich bevorzugt die Mineralsäuren Schwefelsäure und Salpetersäure sowie geeignete Mischungen dieser Säuren.

Der Ätzvorgang an sich verläuft schnell im Bereich von Sekunden oder wenigen Minuten. Die auftretenden, ablaufbedingten Kosten sind entsprechend gering. Eine besondere Reinigung des zu behandelnden Gutes ist nicht erforderlich. Das erfindungsgemäße Verfahren kann auch mehrmals durchgeführt werden, gegebenenfalls mit unterschiedlichen Säuren oder Säuremischungen, um einen tieferen Abtrag zu erzielen. Auch kann der Prozess im Laufe der Einsatzzeit wiederholt werden.

Eine möglichst optimal aufeinander abgestimmte Gestaltung von unmittelbar miteinander in Kontakt tretenden Laufflächen der Reibpaarung ist für die Lebensdauer der Anwendung von entscheidender Bedeutung. Es ist tribologisch weitgehend unerheblich, was sich einige Millimeter oder auch Zehntelmillimeter tief unter der Oberfläche im Werkstoff befindet, entscheidend ist die Kontaktfläche. Besonders zu Beginn der gleitenden Bewegung, während der Einlaufphase eines Bauteiles, ist bereits auf eine tribologisch günstige Oberfläche zu achten.

Die mit der Erfindung erzielten Vorteile bestehen insbesondere darin, dass durch die extrem kurze Prozessdauer der Oberflächenbehandlung ein entsprechend rationelles Verfahren zur Verfügung steht. Aus dem Verfahren resultiert eine für den jeweiligen tribologischen Bedarf optimale Oberfläche mit günstigen Einlaufbedingungen, die in ihrer Auswirkung den Einlaufprozess beschleunigen, den Einlaufverschleiß minimieren und einen wesentlichen Beitrag zur Standzeit des Lagers liefern.

Es wird eine oxidierende Säure verwendet welche die edleren Phasenbestandteile herauslöst. Bei Anwendung einer oxidierend wirkenden Säure wird das "edlere" Grundmaterial angegriffen, die unedlere Phase hingegen wird dabei durch Oxidation passiviert und so unlöslich.

Ein weiterer Aspekt der Erfindung schließt ein Gleitlager ein, das nach dem vorstehend beschriebenen Verfahren hergestellt wurde und aus einer Kupfer-Aluminium-Mehrstoffbronze besteht.

Legierungen von Kupfer und Aluminium, im allgemeinen Sprachgebrauch als "Aluminiumbronzen" bezeichnet, besitzen im binären System bei einem Elementgehalt von bis zu 9 Gew.-% Aluminium ein homogenes alpha-Gefüge. Daneben gibt es Aluminium-Mehrstofflegierungen mit einem Aluminiumgehalt bis zu 10 Gew.-%, die weitere Legierungsbestandteile enthalten, wie beispielsweise Eisen, Nickel, Mangan, Zink und Silicium. Das Gefüge der Mehrstofflegierung ist dann unter Ausbildung weiterer Phasenbestandteile heterogen. Durch Zusätze von Eisen oder Nickel bildet sich eine intermetallische Phase, die eine erhebliche Festigkeitssteigerung bewirkt. Dabei wirkt Eisen bereits bei relativ geringer Konzentration kornfeinend auf das Kristallgefüge.

Zu dieser Werkstoffgruppe zählen auch die mittels Sprühkompaktieren hergestellten Mehrstofflegierungen, die ein seigerungsarmes und feinkörniges Gefüge aufweisen. Beispiele hierfür sind die Legierungen CuAl13Fe4,5CoMn und CuAl15Fe4,5CoMn.

Derartige Mehrstoffaluminiumbronzen weisen außer einer sehr hohen Festigkeit zudem eine hohe Verschleißbeständigkeit und eine gute Korrosionsbeständigkeit auf. Sie sind in hohem Maße belastbar und warmfest bis ca. 350°C. Durch ihre vorzüglichen Eigenschaften werden diese Werkstoffe als Buchsen den erhöhten Anforderungen an die Kolbenlagerung im Automotivbereich gerecht. Insbesondere gilt dies für Lagerbuchsen in hoch belasteten Stahlkolben und für Pleuel bei Dieselmotoren.

Vorteilhafterweise können die im Bereich der herausgelösten Phasenanteile gebildeten Kavitäten als Schmierstoffdepots ausgebildet sein. Dabei bilden die Vertiefungen ein Reservoir für die Schmierstoffe. Durch die Depots wird auch die so genannte Drei-Körper-Abrasion, die durch Partikel zwischen Lagerfläche und Gegenlagerfläche stattfindet, weitgehend unterdrückt. Partikel, die in erster Linie beim Gleiten der Lagerflächen entstehen und die Kratzer oder anderweitige Beschädigungen der Lauffläche verursachen können, werden von den Kavitäten aufgenommen und sogar zu einem gewissen Teil dauerhaft eingelagert. Hierdurch werden der Verschleiß und die Reibung der Gleitpartner verringert.

In bevorzugter Ausgestaltung der Erfindung kann das Gleitlager aus einer zweiphasigen CuAl10Ni5Fe4-Legierung bestehen. Vorteilhafterweise kann das Gleitlager folgende Legierungszusammensetzung aufweisen [in Gew.-%]:

| Cu | Rest |
|---|---|
| Al | 9,0 bis 10,5 % |
| Ni | 4,0 bis 6,0 % |
| Fe | 3,5 bis 5,0 % |

und wahlweise bis zu 1,0 % Zn, 0,1 % Pb, 1,5 % Mn und 0,1 % Si.

Bevorzugt kann bei dem Gleitlager der Gehalt des Elements Eisen in der Legierung geringer sein als der von Nickel.

Derartige Werkstoffe sind mehrphasig und können neben der Cu reichen alpha-Phase noch eine harte kappa-Phase aufweisen. Dabei unterscheiden sich die Ausscheidungsphasen in ihrem elektrochemischen Potential beträchtlich von dem des Grundmaterials. Bei dieser speziellen Legierung sind in der harten kappa-Phase die "unedlen" Elemente Aluminium, Eisen und Nickel angereichert. . Bei Anwendung einer oxidierend wirkenden Säure wird bevorzugt das "edlere" Grundmaterial angegriffen, die kappa-Phase wird dabei durch Oxidation entsprechend passiviert. Zurück bleibt eine für die jeweilige Anwendung tribologisch optimale Oberfläche mit optimalen Einlaufbedingungen, die in ihrer Auswirkung den Einlaufprozess beschleunigen und den Einlaufverschleiß minimieren.

### Beispiel:

Unbehandelte und gemäß dem erfindungsgemäßen Verfahren geätzte Buchsen wurden auf einem Gleitlagerprüfstand für eine Zeitdauer von 0,5 h unter einer Last von F=10000 N (Schwenkwinkel 60°) mit 60 Zyklen/Minute getestet. Anschließend wurde der belastete Buchsenbereich unter dem Raster-Elektronenmikroskop untersucht.

Unbehandelte Buchsen zeigten zwar noch eine weitgehend glatte Oberfläche, die jedoch als Verschleißspuren Riefen aufwies, die durch harte Partikel hervorgerufen werden und die sich über die Lauffläche fortsetzen. Stetig fortschreitender Verschleiß ist die weitere Folge.

Bei Buchsen mit erhabenen harten Phasenbestandteilen bleiben diese auch über die Versuchsdauer stehen und bilden die tragende Lauffläche zumindest während der Einlaufphase. Die Zwischenräume dienen als Schmierstoffdepot und sorgen frühzeitig für einen verschleißarmen Lauf. Es stellt sich ein gutes Laufbild ein.

Ausführungsbeispiele der Erfindung werden anhand einer schematischen Zeichnung näher erläutert.

Darin zeigen:
- Fig. 1: eine rasterelektronenmikroskopische Aufnahme einer Gleitoberfläche eines Gleitlagers mit partiell herausgelösten Phasenbestandteilen, und
- Fig. 2: eine rasterelektronenmikroskopische Aufnahme einer Gleitoberfläche eines Gleitlagers mit großflächig herausgelösten Phasenbestandteilen.

Einander entsprechende Teile sind in allen Figuren mit denselben Bezugszeichen versehen.

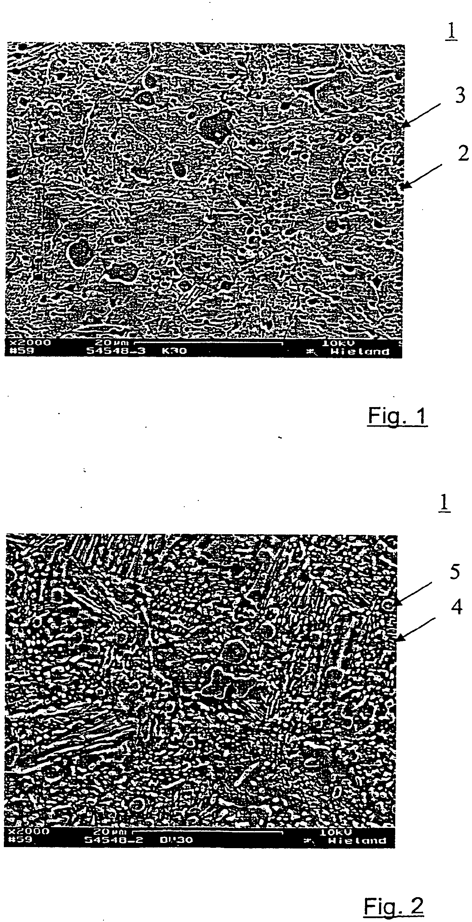

Fig. 1 zeigt eine rasterelektronenmikroskopische Aufnahme einer Gleitoberfläche 1 eines Gleitlagers mit partiell herausgelösten harten Phasenbestandteilen 2. welches kein Teil der Erfindung bildet Die erhabenen weichen Phasenbestandteile 3 wurden durch den Ätzprozess nicht angegriffen und bilden die mit der Gegenlagerfläche eines Gleitpartners in Kontakt tretende Oberfläche aus, die im dargestellten Beispiel immer noch weitgehend flächig ausgebildet ist. Durch die herausgelösten harten Phasenbestandteile 2 bildet sich eine Kavität, die im Betrieb Schmierstoffe aufnehmen kann.
Fig. 2 zeigt eine rasterelektronenmikroskopische Aufnahme einer Gleitoberfläche 1 eines Gleitlagers mit großflächig herausgelösten weichen Phasenbestandteilen 4. Die erhabenen härteren Phasenbestandteile 5 wurden durch den Ätzprozess wiederum nicht angegriffen und bilden in diesem Beispiel eine mit der Gegenlagerfläche in Kontakt tretende Oberfläche. Es bilden sich verhältnismäßig große Kavitäten, die miteinander in Verbindung stehen und in denen Schmierstoffe auch flächig transportiert werden können.

### Bezugszeichenliste

- 1: Gleitoberfläche
- 2: herausgelöste harte Phasenbestandteile (Kavitäten)
- 3: erhabene weiche Phasenbestandteile
- 4: herausgelöste weiche Phasenbestandteile (Kavitäten)
- 5: erhabene harte Phasenbestandteile

## Patentansprüche

1. Verfahren zur Herstellung eines Gleitlagers mit einer Gleitoberfläche (1) aus einer Kupfer-Aluminium-Mehrstoffbronze, zumindest bestehend aus einer kupferreichen alpha-Phase und einer aluminiumreichen kappa-Phase (4, 5),
**dadurch gekennzeichnet,**
**dass** mittels einer oxidierenden Säure die edleren Phasenbestandteile an der Gleitoberfläche (1) herausgelöst werden und zumindest die kappa-Phase (5) erhaben zurückbleibt, wobei die kappa-Phase durch Oxidation passiviert wird.

2. Gleitlager, hergestellt nach dem Verfahren gemäß Anspruch 1, **dadurch gekennzeichnet, dass** die im Bereich der herausgelösten Phasenanteile (4) gebildeten Kavitäten als Schmierstoffdepots ausgebildet sind.

3. Gleitlager, hergestellt nach dem Verfahren gemäß Anspruch 1, **dadurch gekennzeichnet, dass** es aus einer zweiphasigen CuAl10Ni5Fe4-Legierung besteht.

4. Gleitlager, hergestellt nach dem Verfahren gemäß Anspruch 1, **gekennzeichnet durch** folgende Legierungszusammensetzung [in Gew.-%]:
| Cu | Rest |
|---|---|
| Al | 9,0 bis 10,5 % |
| Ni | 4,0 bis 6,0 % |
| Fe | 3,5 bis 5,0 % |
und wahlweise bis zu 1,0 % Zn, 0,1 % Pb, 1,5 % Mn und 0,1 % Si.

5. Gleitlager nach Anspruch 4, **dadurch gekennzeichnet, dass** der Gehalt des Elements Eisen in der Legierung geringer ist als der von Nickel.

## Claims

1. A method for producing a sliding bearing having a sliding surface (1) comprising a copper-aluminium multi-alloy bronze, at least consisting of a copper-rich alpha phase and an aluminium-rich kappa phase (4, 5),
**characterised in that**
the nobler phase constituents are dissolved out at the sliding surface (1) by means of an oxidising acid and at least the kappa phase (5) remains in raised form, wherein the kappa phase is passivated by oxidation.

2. A sliding bearing produced according to the method according to claim 1, **characterised in that** the cavities formed in the region where the phase fractions (4) have been dissolved out are designed as lubricant reservoirs.

3. A sliding bearing produced according to the method according to claim 1, **characterised in that** it consists of a two-phase CuAl10Ni5Fe4 alloy.

4. A sliding bearing produced according to the method according to claim 1, **characterised by** the following alloy composition [in % by weight]:
| Cu | remainder |
|---|---|
| Al | 9.0 to 10.5% |
| Ni | 4.0 to 6.0% |
| Fe | 3.5 to 5.0% |
and optionally up to 1.0% Zn, 0.1 % Pb, 1.5% Mn and 0.1 % Si.

5. A sliding bearing according to claim 4, **characterised in that** the content of the element iron in the alloy is lower than that of nickel.

## Revendications

1. Procédé pour la préparation d'un palier à glissement avec une surface de glissement (1) constituée d'un bronze multiconstituant-aluminium-cuivre, constitué d'au moins une phase alpha riche en cuivre et d'une phase kappa riche en aluminium (4, 5),
**caractérisé en ce que** les constituants de phase plus nobles sur la surface de glissement (1) sont supprimés à l'aide d'un acide oxydant et au moins la phase kappa (5) subsiste en relief, la phase kappa étant passivée par oxydation.

2. Palier à glissement, préparé selon le procédé selon la revendication 1, **caractérisé en ce que** les cavités formées dans le domaine des parts de phase supprimées (4) sont formées comme des dépôts de lubrifiant.

3. Palier à glissement, préparé selon le procédé selon la revendication 1, **caractérisé en ce qu'**il est constitué d'un alliage-CuAl10Ni5Fe4 biphasique.

4. Palier à glissement, préparé selon le procédé selon la revendication 1, **caractérisé par** la composition d'alliage suivante [en % en masse]
| Cu reste |
|---|
| Al de 9,0 à 10,5% |
| Ni de 4,0 à 6,0 % |
| Fe de 3,5 à 5,0 % |
et éventuellement jusqu'à 1,0 % de Zn, 0,1 % de Pb, 1,5 % de Mn et 0,1 % de Si.

5. Palier à glissement selon la revendication 4, **caractérisé en ce que** la teneur de l'élément fer dans l'alliage est inférieure à celle du nickel.
